# EUROPÄISCHE PATENTSCHRIFT

(11) **EP 3 680 462 B1**
(45) Veröffentlichungstag und Bekanntmachung des Hinweises auf die Patenterteilung: **13.12.2023**
(21) Anmeldenummer: 19216757.5
(22) Anmeldetag: 17.12.2019
(51) Int. Cl.: F01N 3/20, F01N 3/28, F01N 13/00, F01N 13/18

(54) **ABGASANLAGE**
EXHAUST GAS SYSTEM
INSTALLATION DE GAZ D'ÉCHAPPEMENT

(30) Priorität: 08.01.2019 DE 102019100302; 26.02.2019 DE 102019104772
(43) Veröffentlichungstag der Anmeldung: 15.07.2020
(73) Patentinhaber: Purem GmbH, 66539 Neunkirchen (DE)
(72) Erfinder: Kurpejovic, Enver, 73230 Kirchheim unter Teck (DE); Palinkas, Marc, 72631 Aichtal (DE); Wolf, Thomas, 73734 Esslingen (DE); Yenugula, Krishna Siva Prasad Reddy, 73734 Esslingen (DE); Hass, Ruben, 70599 Stuttgart (DE)
(74) Vertreter: Ruttensperger Lachnit Trossin Gomoll

(56) Entgegenhaltungen:
- EP-A1- 3 216 992
- DE-A1-102014 206 907
- DE-A1-102016 114 283
- DE-U1-202015 008 560

## Beschreibung

Die vorliegende Erfindung betrifft eine Abgasanlage für eine Brennkraftmaschine gemäß dem Oberbegriff des Anspruchs 1, umfassend eine Oxidationskatalysatoreinheit mit einem in Richtung einer ersten Gehäuseachse langgestreckten ersten Katalysatorgehäuse, eine SCR-(Selektive Katalytische Reduktion)-Katalysatoreinheit mit einem in Richtung einer zweiten Gehäuseachse langgestreckten zweiten Katalysatorgehäuse, ein mit einem stromaufwärtigen Verbindungsbereich an ein stromabwärtiges Ende des ersten Katalysatorgehäuses und mit einem stromabwärtigen Verbindungsbereich an ein stromaufwärtiges Ende des zweiten Katalysatorgehäuses anschließendes Mischergehäuse, einen in dem Mischergehäuse angeordneten und an dem Mischergehäuse getragenen Mischer sowie eine an dem Mischergehäuse getragene Reaktionsmittelabgabeanordnung zum Abgeben von Reaktionsmittel in einen Reaktionsmittelaufnahmekanal des Mischers.

Eine derartige Abgasanlage ist aus der EP 3 216 992 A1 bekannt.

Es ist die Aufgabe der vorliegenden Erfindung, eine auch mit komplexer Formgebung einfach herstellbare Abgasanlage für eine Brennkraftmaschine insbesondere in einem Fahrzeug bereitzustellen.

Erfindungsgemäß wird diese Aufgabe gelöst durch eine Abgasanlage für eine Brennkraftmaschine, wie in den Ansprüchen definiert und unter anderem umfassend:
- eine Oxidationskatalysatoreinheit mit einem in Richtung einer ersten Gehäuseachse langgestreckten ersten Katalysatorgehäuse,
- eine SCR-Katalysatoreinheit mit einem in Richtung einer zweiten Gehäuseachse langgestreckten zweiten Katalysatorgehäuse,
- ein mit einem stromaufwärtigen Verbindungsbereich an ein stromabwärtiges Ende des ersten Katalysatorgehäuses und mit einem stromabwärtigen Verbindungsbereich an ein stromaufwärtiges Ende des zweiten Katalysatorgehäuses anschließendes Mischergehäuse,
- einen in dem Mischergehäuse angeordneten und an dem Mischergehäuse getragenen Mischer,
- eine an dem Mischergehäuse getragene Reaktionsmittelabgabeanordnung zum Abgeben von Reaktionsmittel in einen Reaktionsmittelaufnahmekanal des Mischers.

Bei dieser Abgasanlage umfasst das Mischergehäuse ein den stromaufwärtigen Verbindungsbereich bereitstellendes erstes Gehäuseteil und ein mit dem ersten Gehäuseteil verbundenes und zusammen mit dem ersten Gehäuseteil den stromabwärtigen Verbindungsbereich bereitstellendes zweites Gehäuseteil.

Durch den Aufbau des Mischergehäuses mit zwei Gehäuseteilen wird es einerseits möglich, den Mischer in einfacher Weise in dieses zu integrieren, andererseits kann jedes der Gehäuseteile vor dem Verbinden derselben miteinander mit vergleichsweise komplexer Geometrie bereitgestellt werden.

Für eine stabile Verbindung der beiden Gehäuseteile miteinander kann vorgesehen sein, dass das erste Gehäuseteil einen ersten Verbindungsrandbereich aufweist, dass das zweite Gehäuseteil einen zweiten Verbindungsrandbereich aufweist, und dass einer der beiden Verbindungsrandbereiche den anderen Verbindungsrandbereich an der Außenseite des den anderen Verbindungsrandbereich aufweisenden Gehäuseteils übergreift. Vorteilhafterweise sind die beiden Verbindungsrandbereiche so gestaltet, dass die beiden Gehäuseteile im Wesentlichen in einer Verbindungsebene miteinander verbunden sind.

Für eine stabile Anbindung des Mischergehäuses an die beiden Katalysatoreinheiten wird vorgeschlagen, dass der stromaufwärtige Verbindungsbereich einen das erste Katalysatorgehäuse an dessen Außenseite übergreifenden stromaufwärtigen Verbindungsrandbereich aufweist. Erfindungsgemäß weist der stromabwärtige Verbindungsbereich einen das zweite Katalysatorgehäuse an dessen Außenseite übergreifenden stromabwärtigen Verbindungsrandbereich auf, wobei ein erster Teilbereich des stromabwärtigen Verbindungsrandbereichs am ersten Gehäuseteil vorgesehen ist und ein zweiter Teilbereich des stromabwärtigen Verbindungsrandbereichs am zweiten Gehäuseteil vorgesehen ist.

Jeder der beiden Teilbereiche des stromabwärtigen Verbindungsrandbereichs kann so dimensioniert sein, dass die beiden Teilbereiche das zweite Katalysatorgehäuse in Umfangsrichtung bezüglich der zweiten Gehäuseachse in im Wesentlichen gleichem Ausmaß, also beispielsweise in einem Winkelbereich von jeweils etwa 180° bezüglich der zweiten Gehäuseachse, umgreifen.

Eine sehr stabile Struktur kann dadurch erhalten werden, dass die zweite Gehäuseachse in einer Verbindungsebene des ersten Gehäuseteils mit dem zweiten Gehäuseteil liegt oder sich dazu parallel erstreckt. Dies bedeutet, dass die Verbindung der beiden Gehäuseteile miteinander einerseits und die Verbindung des Mischergehäuses mit dem zweiten Katalysatorgehäuse andererseits in zueinander im Wesentlichen orthogonal stehenden Ebenen realisiert sind.

Für eine optimierte Anströmung des Mischers mit die Oxidationskatalysatoreinheit durchströmendem Abgas kann die erste Gehäuseachse bezüglich einer Verbindungsebene des ersten Gehäuseteils mit dem zweiten Gehäuseteil unter einem von 90° verschiedenen Winkel geneigt verlaufen.

Dazu kann vorgesehen sein, dass die erste Gehäuseachse bezüglich der Verbindungsebene unter einem Winkel im Bereich von 93° bis 100° von der zweiten Gehäuseachse weg geneigt ist.

Zur Anbindung des Mischers bzw. der Reaktionsmittelabgabeanordnung an das Mischergehäuse sind an dem zweiten Gehäuseteil ein zur ersten Gehäuseachse sich im Wesentlichen parallel erstreckender Trägerwandungsbereich und ein vom Trägerwandungsbereich sich in Richtung vom stromabwärtigen Verbindungsbereich weg erstreckender Übergangswandungsbereich vorgesehen.

Ferner kann der Übergangswandungsbereich sich vom Trägerwandungsbereich im Wesentlichen orthogonal zur ersten Gehäuseachse zum zweiten Verbindungsrandbereich erstrecken. Es wird somit im zweiten Gehäuseteil eine Einbuchtung geschaffen, in welcher für eine kompakte Ausgestaltung der Abgasanlage die im Wesentlichen außerhalb des Mischergehäuses positionierte Reaktionsmittelabgabeanordnung zumindest teilweise, vorteilhafter Weise im Wesentlichen vollständig aufgenommen sein kann.

Um sicherzustellen, dass im Wesentlichen das gesamte von einer Brennkraftmaschine ausgestoßene Abgas mit Reaktionsmittel durchmischt werden kann, wird weiter vorgeschlagen, dass an dem Mischergehäuse, vorzugsweise dem ersten Gehäuseteil, ein einen das stromabwärtige Ende des ersten Katalysatorgehäuses verlassenden Abgasstrom in Richtung zu dem Mischer leitendes Leitelement festgelegt ist.

Eine einfach und kostengünstig herstellbare, gleichwohl jedoch auch unter thermischer Belastung stabile Ausgestaltung wird dadurch erreicht, dass das erste Gehäuseteil und das zweite Gehäuseteil als Blechumformteile bereitgestellt sind und materialschlüssig miteinander verbunden sind.

Bei der erfindungsgemäß aufgebauten Abgasanlage kann der Mischer einen scheibenartigen Mischerkörper mit einem im Wesentlichen plattenartigen ersten Mischerkörperteil und einem mit dem ersten Mischerkörperteil verbundenen, im Wesentlichen plattenartigen zweiten Mischerkörperteil umfassen, wobei in wenigstens einem der Mischerkörperteile eine Ausbauchung zum Bereitstellen des im Wesentlichen in einer Reaktionsmittel-Haupteinspritzrichtung sich erstreckenden Reaktionsmittelaufnahmekanals ausgebildet ist, und wobei in wenigstens einem der Mischerkörperteile wenigstens eine Ausbauchung zum Bereitstellen eines von dem Reaktionsmittelaufnahmekanal sich weg erstreckenden Reaktionsmittelabgabekanals ausgebildet ist.

Für eine gleichmäßige Abgabe von mit Reaktionsmittel durchmischtem Abgas können in wenigstens einem der Mischerkörperteile zwei Ausbauchungen zum Bereitstellen zweier von dem Reaktionsmittelaufnahmekanal sich zueinander entgegengesetzt weg erstreckender Reaktionsmittelabgabekanäle ausgebildet sein. Der scheibenartige Mischerkörper kann im Wesentlichen orthogonal zur ersten Gehäuseachse angeordnet am zweiten Gehäuseteil getragen sein.

Die vorliegende Erfindung wird nachfolgend mit Bezug auf die beiliegenden Figuren detailliert beschrieben. Es zeigt:
- Fig. 1: eine Seitenansicht eines Teils einer Abgasanlage für eine Brennkraftmaschine;
- Fig. 2: den in Fig. 1 dargestellten Teil einer Abgasanlage in Explosionsdarstellung;
- Fig. 3: eine der Fig. 1 entsprechende, teilweise aufgeschnittene Darstellung;
- Fig. 4: einen Mischer der in den Fig. 1 bis 3 dargestellten Abgasanlage in Explosionsdarstellung;
- Fig. 5: den Mischer in Seitenansicht,
- Fig. 6: den Mischer in Blickrichtung VI in Fig. 5.

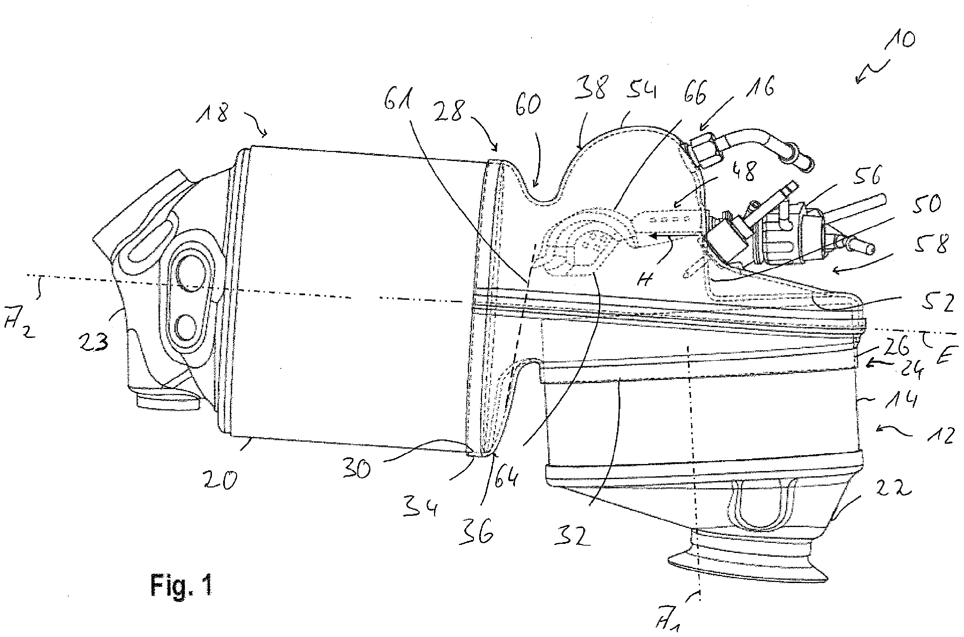

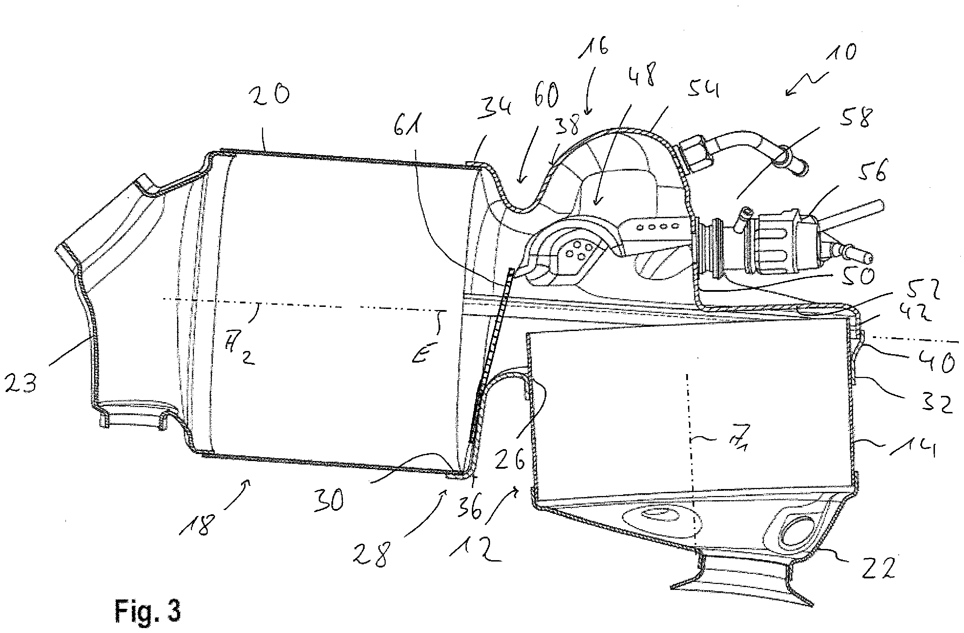

Die Fig. 1 bis 3 zeigen einen Teil einer allgemein mit 10 bezeichneten Abgasanlage einer Brennkraftmaschine. Dieser Teil der Abgasanlage 10 umfasst stromaufwärts eine Oxidationskatalysatoreinheit 12 mit einem in Richtung einer ersten Gehäuseachse A₁ langgestreckten, beispielsweise im Wesentlichen zylindrischen und damit die erste Gehäuseachse A₁ umgebenden ersten Katalysatorgehäuse 14. Stromabwärts umfasst der dargestellte Teil der Abgasanlage 10 eine SCR-(Selektive Katalytische Reduktion)-Katalysatoreinheit 18 mit einem in Richtung einer zweiten Gehäuseachse A₂ langgestreckten und somit diese umgebenden, beispielsweise im Wesentlichen zylindrischen zweiten Katalysatorgehäuse 20. Die beiden Gehäuseachsen A₁, A₂ können jeweils die Längsmittenachsen des ersten Katalysatorgehäuses 14 bzw. des zweiten Katalysatorgehäuses 20 sein. Im ersten Katalysatorgehäuse 14 ist ein nicht dargestellter Oxidationskatalysator, insbesondere Diesel-Oxidationskatalysator, angeordnet. Im zweiten Katalysatorgehäuse 20 ist ein ebenfalls nicht dargestellter SCR-Katalysator aufgenommen.

Zwischen den beiden Katalysatoreinheiten 12, 18 bzw. den beiden Katalysatorgehäusen 14, 20 ist ein allgemein mit 16 bezeichnetes Mischergehäuse angeordnet. Dieses stellt eine Strömungsverbindung zwischen den beiden Katalysatoreinheiten 12, 18 bereit. An den von dem Mischergehäuse 16 jeweils abgewandten Endbereichen der Katalysatorgehäuse 14, 20 sind jeweilige Anschlusselemente 22, 23 vorgesehen, über welche die Katalysatoreinheiten 12, 18 an daran anschließende Abgasführungskomponenten angeschlossen werden können.

Das Mischergehäuse 16 weist einen stromaufwärtigen Verbindungsbereich 24 auf, mit welchem dieses an ein stromabwärtiges Ende 26 des ersten Katalysatorgehäuses 14 angebunden ist. Ferner weist das Mischergehäuse 16 einen stromabwärtigen Verbindungsbereich 28 auf, mit welchem dieses an ein stromaufwärtiges Ende 30 des zweiten Katalysatorgehäuses 20 angebunden ist.

Der stromaufwärtige Verbindungsbereich 24 umfasst einen im Wesentlichen zylindrisch ausgebildeten stromaufwärtigen Verbindungsrandbereich 32, mit welchem das Mischergehäuse 16 das stromabwärtige Ende 26 des ersten Katalysatorgehäuses 14 an dessen Außenseite übergreift und daran beispielsweise durch Verschweißung festgelegt ist. Gleichermaßen weist der stromabwärtige Verbindungsbereich 28 einen stromabwärtigen Verbindungsrandbereich 34 mit im Wesentlichen zylindrischer Gestalt auf, mit welchem das Mischergehäuse 16 das stromaufwärtige Ende 30 des zweiten Katalysatorgehäuses 20 an dessen Außenseite übergreift und daran beispielsweise durch Verschweißung festgelegt ist.

Das Mischergehäuse 16 ist mit zwei Gehäuseteilen 36, 38 aufgebaut. Die beiden Gehäuseteile 36, 38 sind miteinander im Wesentlichen im Bereich einer Verbindungsebene E miteinander verbunden, welche, wie in Fig. 1 dargestellt, beispielsweise die zweite Gehäuseachse A₂ enthalten kann oder dazu parallel liegt. Insbesondere kann die Anordnung derart sein, dass die Verbindungsebene E zu einer durch die beiden Gehäuseachsen A₁, A₂ aufgespannten und der Zeichenebene der Fig. 1 entsprechenden Ebene orthogonal steht.

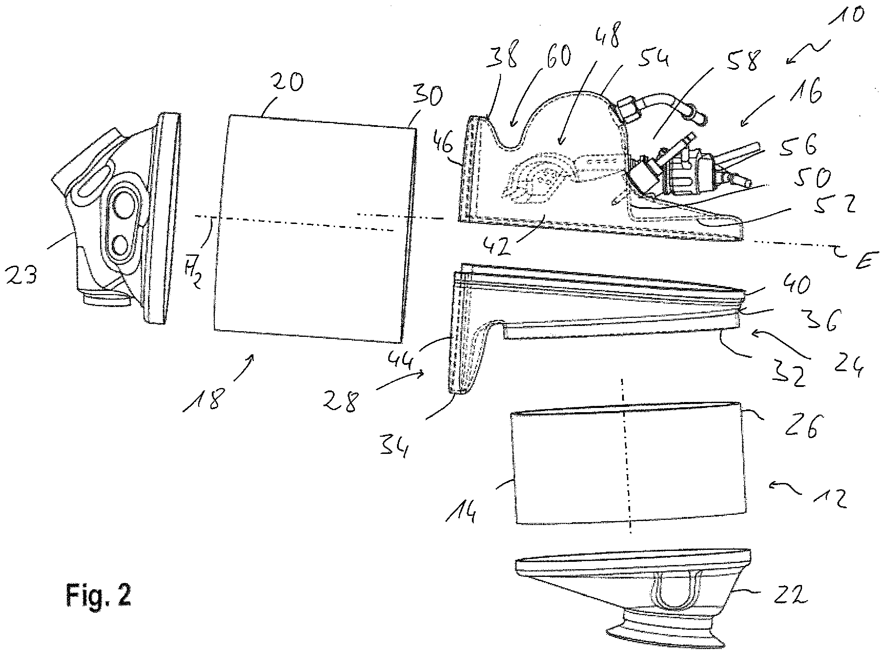

Zur Verbindung der beiden Gehäuseteile 36, 38 miteinander weist das den stromaufwärtigen Verbindungsbereich 24 bereitstellende erste Gehäuseteil 36 einen ersten Verbindungsrandbereich 40 auf. Dementsprechend weist das zweite Gehäuseteil 38 einen zweiten Verbindungsrandbereich 42 auf. Der erste Verbindungsrandbereich 40 und der zweite Verbindungsrandbereich 42 können derart aufeinander abgestimmt sein, dass der erste Verbindungsrandbereich 42 des ersten Gehäuseteils 36 das den zweiten Verbindungsrandbereich 42 bereitstellende zweite Gehäuseteil 38 an dessen Außenseite übergreift und daran beispielsweise durch Verschweißung festgelegt ist. Jeder der beiden Verbindungsrandbereiche 40, 42 weist eine im Wesentlichen U-förmige Gestalt auf, und ist bezüglich der Verbindungsebene E im Wesentlichen nicht gekrümmt. Beispielsweise kann die Verbindungsebene E, so wie in Fig. 2 erkennbar, durch eine Randkante des zweiten Verbindungsrandbereichs 42 aufgespannt sein. Gleichermaßen könnte die Verbindungsebene E durch eine Randkante des ersten Verbindungsrandbereichs 40 aufgespannt sein.

Aufgrund der Ausgestaltung des Mischergehäuses 16 mit den beiden Gehäuseteilen 36, 38 ergibt sich eine Struktur, bei welcher der stromabwärtige Verbindungsbereich 28 bzw. der stromabwärtige Verbindungsrandbereich 34 in einen am ersten Gehäuseteil 36 vorgesehenen ersten Teilbereich 44 und einen am zweiten Gehäuseteil 38 vorgesehenen Teilbereich 46 aufgeteilt ist. Diese beiden Teilbereiche 44, 46 ergeben zusammen den um die zweite Gehäuseachse A₂ unterbrechungsfrei umlaufenden stromabwärtigen Verbindungsrandbereich 34. Vorteilhafterweise ist die Ausgestaltung derart, dass jeder der beiden Teilbereiche 44, 46 sich in gleichem Ausmaß um die zweite Gehäuseachse A₂ das zweite Katalysatorgehäuse 20 umgreifend erstreckt, so dass jeder der beiden Teilbereiche 44, 46 das zweite Katalysatorgehäuse 20 in seinem stromaufwärtigen Ende 30 in einen Winkelbereich von etwa 180° umgreift.

In den Fig. 1 bis 3 ist weiter zu erkennen, dass die beiden Gehäuseachsen A₁ und A₂ zueinander nicht orthogonal stehen. Die erste Gehäuseachse A₁ ist bezüglich der zweiten Gehäuseachse A₂ bzw. auch der Verbindungsebene E unter einem von 90° verschiedenen Winkel in Richtung von der SCR-Katalysatoreinheit 18 weg geneigt. Beispielsweise können die beiden Gehäuseachsen A₁ und A₂ einen Winkel im Bereich von 93° bis 100° zwischen sich einschließen.

An dem Mischergehäuse 16 bzw. in dem Mischergehäuse 16 ist ein allgemein mit 48 bezeichneter Mischer getragen. Dazu weist das Mischergehäuse 16 einen zur ersten Gehäuseachse A₁ näherungsweise parallel sich erstreckenden Trägerwandungsbereich 50 auf. Dieser Trägerwandungsbereich 50 liegt näherungsweise auch im Bereich der ersten Gehäuseachse A₁ bzw. eines Radialzentrums des ersten Katalysatorgehäuses 14. An seinem dem ersten Katalysatorgehäuse 14 nahe liegenden Ende geht der Trägerwandungsbereich 50 über in einen Übergangswandungsbereich 52. Der Übergangswandungsbereich 52 erstreckt sich, ausgehend von seinem Anschluss an den Trägerwandungsbereich 50, in Richtung vom zweiten Katalysatorgehäuse 20 weg auf den zweiten Verbindungsrandbereich 42 zu. An einem vom Übergangswandungsbereich 52 entfernten Ende geht der Trägerwandungsbereich 50 in einen kugelkalottenartigen Kuppelbereich 54 des zweiten Gehäuseteils 38 über, welcher an einer vom ersten Katalysatorgehäuse 14 abgewandten Seite des Mischers 48 diesen im Wesentlichen vollständig überdeckend angeordnet ist.

Zusammen mit dem Mischer 48 ist am Trägerwandungsbereich 50 eine allgemein auch als Injektor bezeichnete Reaktionsmittelabgabeanordnung 56 getragen. Die Reaktionsmittelabgabeanordnung 56 liegt im Wesentlichen außerhalb des Mischergehäuses 16 und ist in einer durch den Trägerwandungsbereich 50 und den Übergangswandungsbereich 52 gebildeten Einbuchtung 58 des zweiten Gehäuseteils 38 aufgenommen. Somit ergibt sich eine sehr kompakte Bauart, bei welcher die Reaktionsmittelabgabeanordnung 56 im Wesentlichen vollständig innerhalb der Gesamt-Außenkontur des Mischergehäuses 16 aufgenommen ist und nicht wesentlich darüber hervorsteht.

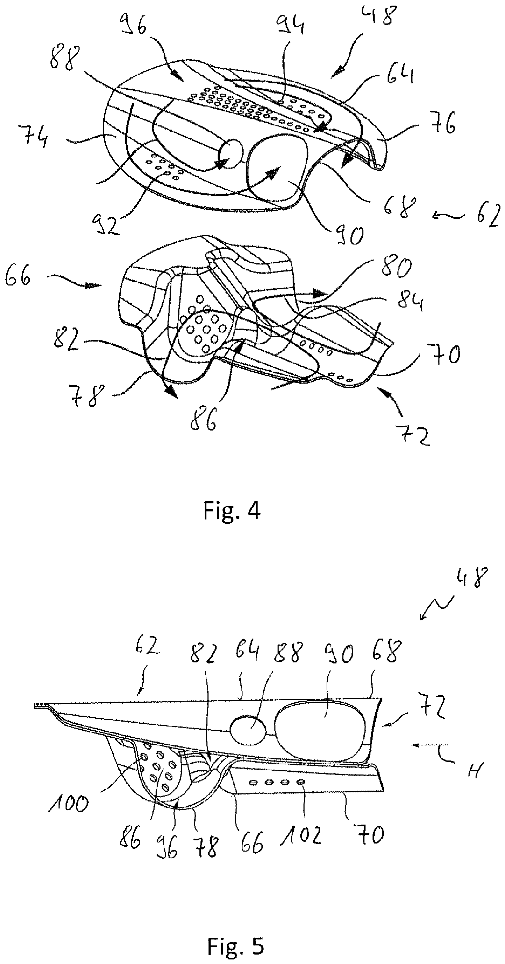

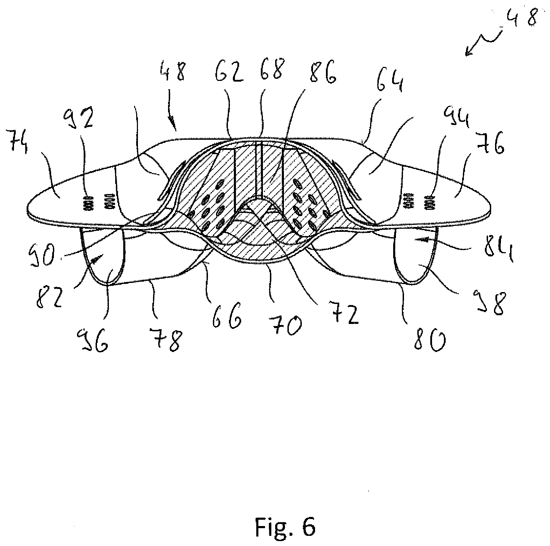

Durch die Reaktionsmittelabgabeanordnung wird Reaktionsmittel, beispielsweise eine Harnstoff/Wasser-Lösung, in einer Reaktionsmittel-Haupteinspritzrichtung H in den Mischer 48 eingespritzt. In dem nachfolgend mit Bezug auf die Fig. 4 bis 6 detailliert beschriebenen Mischer 48 durchmischt das über die Oxidationskatalysatoreinheit 12 in das Mischergehäuse 16 einströmende Abgas sich mit dem von der Reaktionsmittelabgabeanordnung 56 in den Mischer 48 eingespritzten Reaktionsmittel und verlässt den Mischer 48 bzw. das Mischergehäuse 16 als effizient durchmischtes Gemisch aus Abgas und Reaktionsmittel. Dazu tragen auch die am Mischergehäuse 16 gebildete Einbuchtung 58, durch welche der Abgasstrom bezüglich der ersten Gehäuseachse A₁ nach radial einwärts in Richtung auf den Mischer 48 zu geleitet wird, und der Kuppelbereich 54 bei, welcher in einem Bereich stromabwärts bzw. hinter dem Mischer 48 für eine Strömungsverwirbelung und somit eine effiziente Durchmischung von Abgas und Reaktionsmittel sorgt. Der so gebildete Strom eines Gemisches aus Abgas und Reaktionsmittel verlässt das Mischergehäuse 16 über einen zwischen dem Kuppelbereich 54 und dem stromaufwärtigen Verbindungsbereich 24 einerseits und dem stromabwärtigen Verbindungsbereich 28 andererseits gebildeten Einschnürungsbereich 60 in Richtung zur SCR-Katalysatoreinheit 18. Um zu gewährleisten, dass im Wesentlichen das gesamte das Katalysatorgehäuse 14 verlassende Abgas den Mischer 48 durchströmt, ist ein beispielsweise aus Blechmaterial aufgebautes Leitelement 61 vorgesehen. Dieses kann beispielsweise an dem auch mit dem Katalysatorgehäuse 14 verbundenen Gehäuseteil 36 des Mischergehäuses 16 festgelegt sein und den Strömungsraum zwischen dem Gehäuseteil 36 und dem Mischer 48 abschließen. Dazu kann das Leitelement 61 sich ausgehend vom Gehäuseteil 36 bis zum Mischer 48 erstrecken und an dessen vom Gehäuseteil 38 entfernten Ende abgestützt sein. Durch das Leitelement 61 wird der das Katalysatorgehäuse 14 verlassende Abgasstrom in Richtung zum Mischer 48 gelenkt, so dass das Abgas in den Mischer 48 eintritt und in diesem mit Reaktionsmittel durchmischt wird.

Der in den Fig. 4 bis 6 detaillierter dargestellte Mischer 48 weist einen scheibenartigen Mischerkörper 62 auf, der mit zwei plattenartigen Mischerkörperteilen 64, 66 ausgebildet ist. In dem in Richtung stromaufwärts, d. h. der Oxidationskatalysatoreinheit 12 zugewandt positionierten ersten Mischerkörperteil 64, ist eine Ausbuchtung 68 gebildet. In dem in Richtung stromabwärts, also dem Kuppelbereich 54 zugewandt positionierten zweiten Mischerkörperteil 66, ist eine komplementäre Ausbauchung 70 gebildet. Diese beiden Ausbauchungen stellen zusammen einen Reaktionsmittelaufnahmekanal 72 bereit, in welchem das von der Reaktionsmittelabgabeanordnung 56 abgegebene Reaktionsmittel in der Reaktionsmittel-Haupteinspritzrichtung H eingespritzt wird. Es ist darauf hinzuweisen, dass grundsätzlich das Reaktionsmittel in Form eines Sprühkegels abgegeben werden kann und die Reaktionsmittel-Haupteinspritzrichtung H somit im Wesentlichen einer Zentralachse eines derartigen Sprühkegels entsprechen kann.

Beidseits der Ausbauchung 68 sind am ersten Mischerkörperteil 64 im Wesentlichen ebene Plattenbereiche 74, 76 vorgesehen, in welchen dieses beispielsweise materialschlüssig mit dem zweiten Mischerkörperteil 66 verbunden ist. Im zweiten Mischerkörperteil 66 sind zwei weitere Ausbauchungen 78, 80 vorgesehen, welche zusammen mit den Plattenbereichen 74, 76 jeweils einen Reaktionsmittelabgabekanal 82, 84 begrenzen. Die beiden Reaktionsmittelabgabekanäle 82, 84 sind im Bereich eines Umlenkbereich 86 zum Reaktionsmittelaufnahmekanal 72 offen.

Um an der in Richtung stromaufwärts orientierten Seite, also im Bereich des ersten Mischerkörperteils 64, den Eintritt von Abgas zu ermöglichen, sind im Bereich der Ausbauchung 68 Eintrittsöffnungen 88, 90 mit beispielsweise zueinander unterschiedlicher Größe vorgesehen. Ferner sind in den die Reaktionsmittelabgabekanäle 82, 84 überdeckenden Plattenbereichen 74, 76 Eintrittsöffnungen 92, 94 vorgesehen. Auch im Bereich der Ausbauchung 68 können Eintrittsöffnungen 96 vorgesehen sein.

Zum Austritt von Abgas bzw. Reaktionsmittel aus dem Mischer 48 sind einerseits im Bereich der Reaktionsmittelabgabekanäle 82, 84 Austrittsöffnungen 96, 98 vorgesehen. Ferner sind im Umlenkbereich 86 Austrittsöffnungen 100 vorgesehen.

Auch im Bereich der Ausbauchung 70 können Austrittsöffnungen 102 vorgesehen sein.

Mit seiner scheibenartigen Struktur stellt der Mischerkörper 62 eine vergleichsweise große Anströmfläche für das die Oxidationskatalysatoreinheit 12 verlassende Abgas bereit. Über die verschiedenen Eintrittsöffnungen kann Abgas in das Innere des Mischers 48 eintreten und sich dort mit dem in den Reaktionsmittelaufnahmekanal 72 eingespritzten Reaktionsmittel durchmischen. Über die verschiedenen Austrittsöffnungen verlässt das so gebildete Gemisch aus Abgas und Reaktionsmittel den Mischer 48 im Wesentlichen in Richtung auf den Kuppelbereich 54 des Mischergehäuses 16 zu, wird dort umgelenkt und gelangt über den Einschnürungsbereich 60 zur SCR-Katalysatoreinheit 18. Besonders vorteilhaft ist dabei, dass der Mischer 48 mit der scheibenartigen Struktur des Mischerkörpers 62 im Wesentlichen orthogonal zur ersten Gehäuseachse A₁ und somit auch näherungsweise orthogonal zu einer Richtung angeordnet ist, in welcher ein Großteil des die Oxidationskatalysatoreinheit 14 verlassenden Abgases strömt. In Verbindung mit der Formgebung des Mischergehäuses 16 führt dies zu einer effizienten, gleichmäßigen Durchmischung von Abgas und Reaktionsmittel.

Bei der erfindungsgemäß aufgebauten Abgasanlage 10 wird insbesondere durch die Ausgestaltung des Mischergehäuses 16 mit den beiden Gehäuseteilen 36, 38 eine Ausgestaltung desselben mit vergleichsweise komplexer Geometrie, gleichwohl jedoch einfach durchzuführenden Herstellungsvorgängen ermöglicht. Jedes der beiden Gehäuseteile 36, 38 kann für sich alleine beispielsweise durch Umformen eines Blechrohlings hergestellt werden. Die Verbindung dieser beiden Gehäuseteile in den einander übergreifenden Verbindungsrandbereichen 40, 42 erfolgt entlang einer im Wesentlichen in einer Ebene liegenden Linie, so dass auch ein Schweißvorgang zum Erzeugen einer Schweißnaht sehr einfach durchgeführt werden kann. Da diese Verbindungslinie bzw. die Verbindungsebene E im Wesentlichen orthogonal steht zu einer Ebene bzw. Linie, in deren Bereich das zweite Katalysatorgehäuse 20 an das Mischergehäuse 16 angebunden ist, wird eine sehr stabile und zu einer gleichmäßigen Lastverteilung führende Struktur erreicht.

Die vorangehend beschriebene Abgasanlage 10 kann in verschiedenen Aspekten variiert werden. So kann beispielsweise in zumindest einem der Verbindungsbereiche 24, 28 des Mischergehäuses 16 der dort vorgesehene Verbindungsrandbereich 32, 34 das mit diesem verbundene Katalysatorgehäuse 14 bzw. 20 nicht dann dessen Außenseite übergreifen, sondern in dessen axiales Ende 26 bzw. 30 eingesetzt sein. Auch können die beiden Gehäuseachsen A₁, A₂ zueinander orthogonal angeordnet sein, so dass die erste Gehäuseachse A₁ beispielsweise auch orthogonal zur Verbindungsebene E stehen kann.

## Patentansprüche

1. Abgasanlage für eine Brennkraftmaschine, umfassend:
- eine Oxidationskatalysatoreinheit (12) mit einem in Richtung einer ersten Gehäuseachse (A₁) langgestreckten ersten Katalysatorgehäuse (14),
- eine SCR-Katalysatoreinheit (18) mit einem in Richtung einer zweiten Gehäuseachse (A₂) langgestreckten zweiten Katalysatorgehäuse (20),
- ein mit einem stromaufwärtigen Verbindungsbereich (24) an ein stromabwärtiges Ende (26) des ersten Katalysatorgehäuses (14) und mit einem stromabwärtigen Verbindungsbereich (28) an ein stromaufwärtiges Ende (30) des zweiten Katalysatorgehäuses (20) anschließendes Mischergehäuse (16), wobei der stromabwärtige Verbindungsbereich (28) einen das zweite Katalysatorgehäuse (20) an dessen Außenseite übergreifenden stromabwärtigen Verbindungsrandbereich (34) aufweist,
- einen in dem Mischergehäuse (16) angeordneten und an dem Mischergehäuse (16) getragenen Mischer (48),
- eine an dem Mischergehäuse (16) getragene Reaktionsmittelabgabeanordnung (56) zum Abgeben von Reaktionsmittel in einen Reaktionsmittelaufnahmekanal (72) des Mischers (48),
wobei das Mischergehäuse (16) ein den stromaufwärtigen Verbindungsbereich (24) bereitstellendes erstes Gehäuseteil (36) und ein zweites Gehäuseteil (38) umfasst, **dadurch gekennzeichnet, dass** das erste Gehäuseteil (36) und das zweite Gehäuseteil (38) als Blechumformteile bereitgestellt sind und materialschlüssig miteinander verbunden sind, dass das erste Gehäuseteil (36) zusammen mit dem zweiten Gehäuseteil (38) den stromabwärtigen Verbindungsbereich (28) bereitstellt, wobei ein erster Teilbereich (44) des stromabwärtigen Verbindungsrandbereichs (34) am ersten Gehäuseteil (36) vorgesehen ist und ein zweiter Teilbereich (46) des stromabwärtigen Verbindungsrandbereichs (34) am zweiten Gehäuseteil (38) vorgesehen ist, und dass zur Anbindung des Mischers (48) und der Reaktionsmittelabgabeanordnung (56) an das Mischergehäuse (16) an dem zweiten Gehäuseteil (38) ein zur ersten Gehäuseachse (A₁) sich im Wesentlichen parallel erstreckender Trägerwandungsbereich (50) und ein vom Trägerwandungsbereich (50) sich in Richtung vom stromabwärtigen Verbindungsbereich (28) weg erstreckender Übergangswandungsbereich (52) vorgesehen sind.

2. Abgasanlage nach Anspruch 1, **dadurch gekennzeichnet, dass** das erste Gehäuseteil (36) einen ersten Verbindungsrandbereich (40) aufweist, dass das zweite Gehäuseteil (38) einen zweiten Verbindungsrandbereich (42) aufweist, und dass einer der beiden Verbindungsrandbereiche (40, 42) den anderen Verbindungsrandbereich an der Außenseite des den anderen Verbindungsrandbereich aufweisenden Gehäuseteils (38) übergreift.

3. Abgasanlage nach Anspruch 1 oder 2, **dadurch gekennzeichnet, dass** der stromaufwärtige Verbindungsbereich (24) einen das erste Katalysatorgehäuse (14) an dessen Außenseite übergreifenden stromaufwärtigen Verbindungsrandbereich (32) aufweist.

4. Abgasanlage nach einem der Ansprüche 1-3, **dadurch gekennzeichnet, dass** der erste Teilbereich (44) und der zweite Teilbereich (46) des stromabwärtigen Verbindungsrandbereichs (34) das zweite Katalysatorgehäuse (20) in Umfangsrichtung bezüglich der zweiten Gehäuseachse (A₂) in im Wesentlichen gleichem Ausmaß umgreifen.

5. Abgasanlage nach einem der vorangehenden Ansprüche, **dadurch gekennzeichnet, dass** die zweite Gehäuseachse (A₂) in einer Verbindungsebene (E) des ersten Gehäuseteils (36) mit dem zweiten Gehäuseteil (38) liegt oder sich dazu parallel erstreckt.

6. Abgasanlage nach einem der vorangehenden Ansprüche, **dadurch gekennzeichnet, dass** die erste Gehäuseachse (A₁) bezüglich einer Verbindungsebene (E) des ersten Gehäuseteils (36) mit dem zweiten Gehäuseteil (38) unter einem von 90° verschiedenen Winkel geneigt verläuft.

7. Abgasanlage nach Anspruch 6, **dadurch gekennzeichnet, dass** die erste Gehäuseachse (A₁) bezüglich der Verbindungsebene (E) unter einem Winkel im Bereich von 93° bis 100° von der zweiten Gehäuseachse (A₂) weg geneigt ist.

8. Abgasanlage nach Anspruch 2 oder einem der Ansprüche 3-7, sofern auf Anspruch 2 rückbezogen, **dadurch gekennzeichnet, dass** der Übergangswandungsbereich (52) sich vom Trägerwandungsbereich (50) im Wesentlichen orthogonal zur ersten Gehäuseachse (A₁) zum zweiten Verbindungsrandbereich (42) erstreckt.

9. Abgasanlage nach einem der vorangehenden Ansprüche, **dadurch gekennzeichnet, dass** an dem Mischergehäuse (16), vorzugsweise dem ersten Gehäuseteil (36), ein einen das stromabwärtige Ende (26) des ersten Katalysatorgehäuses (14) verlassenden Abgasstrom in Richtung zu dem Mischer (48) leitendes Leitelement (61) festgelegt ist.

10. Abgasanlage nach einem der vorangehenden Ansprüche, **dadurch gekennzeichnet, dass** der Mischer (48) einen scheibenartigen Mischerkörper (62) mit einem im Wesentlichen plattenartigen ersten Mischerkörperteil (64) und einem mit dem ersten Mischerkörperteil (64) verbundenen, im Wesentlichen plattenartigen zweiten Mischerkörperteil (66) umfasst, wobei in wenigstens einem der Mischerkörperteile (64, 66) eine Ausbauchung (68, 70) zum Bereitstellen des im Wesentlichen in einer Reaktionsmittel-Haupteinspritzrichtung (H) sich erstreckenden Reaktionsmittelaufnahmekanals (72) ausgebildet ist, und wobei in wenigstens einem der Mischerkörperteile (64, 66) wenigstens eine Ausbauchung (78, 80) zum Bereitstellen eines von dem Reaktionsmittelaufnahmekanal (72) sich weg erstreckenden Reaktionsmittelabgabekanals (82, 84) ausgebildet ist.

11. Abgasanlage nach Anspruch 10, **dadurch gekennzeichnet, dass** in wenigstens einem der Mischerkörperteile (64, 66) zwei Ausbauchungen (78, 80) zum Bereitstellen zweier von dem Reaktionsmittelaufnahmekanal (72) sich zueinander entgegengesetzt weg erstreckender Reaktionsmittelabgabekanäle (82, 84) ausgebildet sind.

12. Abgasanlage nach Anspruch 10 oder 11, **dadurch gekennzeichnet, dass** der scheibenartige Mischerkörper (62) im Wesentlichen orthogonal zur ersten Gehäuseachse (A₁) angeordnet am zweiten Gehäuseteil (38) getragen ist.

## Claims

1. Exhaust system for an internal combustion engine, comprising:
- an oxidation catalytic converter unit (12) with a first catalytic converter housing (14) elongated in the direction of a first housing axis (A₁),
- an SCR catalytic converter unit (18) with a second catalytic converter housing (20) elongated in the direction of a second housing axis (A₂),
- a mixer housing (16) adjoining a downstream end (26) of the first catalytic converter housing (14) with an upstream connection area (24) and an upstream end (30) of the second catalytic converter housing (20) with a downstream connection area (28), wherein the downstream connection area (28) has a downstream connection edge area (34) extending over the second catalytic converter housing (20) on the outer side thereof,
- a mixer (48), which is arranged in the mixer housing (16) and is carried at the mixer housing (16), and
- a reactant release device (56) carried on the mixer housing (16) for releasing reactant into a reactant-receiving duct (72) of the mixer (48),
wherein the mixer housing (16) comprises a first housing part (36) forming the upstream connection area (24) and a second housing part (38), **characterized in that** the first housing part (36) and the second housing part (38) are provided as shaped sheet metal parts and are connected to one another by connection in substance, that the first housing part (36) forms the downstream connection area (28) together with the second housing part (38), wherein a first partial area (44) of the downstream connection edge area (34) is provided at the first housing part (36) and a second partial area (46) of the downstream connection edge area (34) is provided at the second housing part (38) and **in that** for connecting the mixer (48) and the reactant release device (56) to the mixer housing (16) a carrier wall area (50) extending essentially parallel to the first housing axis (A₁) and a transition wall area (52) extending from the carrier wall area (50) in the direction away from the downstream connection area (28) are provided.

2. Exhaust system in accordance with claim 1, **characterized in that** the first housing part (36) has a first connection edge area (40), that the second housing part (38) has a second connection edge area (42), and that one of the two connection edge areas (40, 42) extends over the other connection edge area on the outer side of the housing part (38) having the other connection edge area.

3. Exhaust system in accordance with claim 1 or 2, **characterized in that** the upstream connection area (24) has an upstream connection edge area (32) extending over the first catalytic converter housing (14) on the outer side thereof.

4. Exhaust system in accordance with one of claims 1-3, **characterized in that** the first partial area (44) and the second partial area (46) of the downstream connection edge area (34) extend around the second catalytic converter housing (20) in the circumferential direction in relation to the second housing axis (A₂) to an essentially equal extent.

5. Exhaust system in accordance with one of the above claims, **characterized in that** the second housing axis (A₂) is located in a connection plane (E) connecting the first housing part (36) to the second housing part (38) or extends parallel thereto.

6. Exhaust system in accordance with one of the above claims, **characterized in that** the first housing axis (A₁) extends sloped at an angle different from 90° in relation to a connection plane (E) connecting the first housing part (36) to the second housing part (38).

7. Exhaust system in accordance with claim 6, **characterized in that** the first housing axis (A₁) is sloped away from the second housing axis (A₂) in relation to the connection plane (E) at an angle in the range of 93° to 100°.

8. Exhaust system in accordance with claim, 2 or one of claims 3-7, if referring back to claim 2, **characterized in that** the transition wall area (52) extends from the carrier wall area (50) essentially at right angles to the first housing axis (A₁) to the second connection edge area (42).

9. Exhaust system in accordance with one of the above claims, **characterized in that** a guide element (61) guiding the exhaust gas stream leaving the downstream end (26) of the first catalytic converter housing (14) in the direction of the mixer (48) is fixed at the mixer housing (16), preferably at the first housing part (36).

10. Exhaust system in accordance with one of the above claims, **characterized in that** the mixer (48) comprises a disk-like mixer body (62) with an essentially plate-like first mixer body part (64) and with an essentially plate-like second mixer body part (66) connected to the first mixer body part (64), wherein a bulge (68, 70) is formed in at least one of the mixer body parts (64, 68) for providing the reactant-receiving duct (72) extending essentially in a reactant main injection direction (H), and wherein at least one bulge (78, 80) is formed in at least one of the mixer body parts (64, 66) for providing a reactant release duct (82, 84) extending away from the reactant-receiving duct (72).

11. Exhaust system in accordance with claim 10, **characterized in that** two bulges (78, 80) are formed in at least one of the mixer body parts (64, 66) for providing two reactant release ducts (82, 84) extending from the reactant-receiving duct (72) in mutually opposite directions.

12. Exhaust system in accordance with claim 10 or 11, **characterized in that** the disk-like mixer body (62) is carried at the second housing part (38) essentially at right angles to the first housing axis (A₁).

## Revendications

1. Système d'échappement pour un moteur à combustion interne, comprenant :
- une unité de catalyseur d'oxydation (12) avec un premier boîtier de catalyseur (14) allongé en direction d'un premier axe de boîtier (A₁),
- une unité de catalyseur SCR (18) avec un deuxième boîtier de catalyseur (20) allongé en direction d'un deuxième axe de boîtier (A₂),
- un boîtier de mélangeur (16) adjacent à une extrémité en aval (26) du premier boîtier de catalyseur (14) avec une zone de raccordement en amont (24) et adjacent à une extrémité en amont (30) du deuxième boîtier de convertisseur catalytique (20) avec une zone de raccordement en aval (28), dans lequel la zone de raccordement en aval (28) comprend une zone de bord de raccordement en aval (34) qui s'étend au-delà du deuxième boîtier catalytique (20) sur son côté extérieur,
- un mélangeur (48), disposé dans le boîtier de mélangeur (16) et porté par le boîtier de mélangeur (16), et
- un dispositif de libération du réactif (56) porté par le boîtier de mélangeur (16) pour libérer le réactif dans un conduit de réception du réactif (72) du mélangeur (48),
dans lequel le boîtier de mélangeur (16) comprend une première partie de boîtier (36) formant la zone de raccordement en amont (24) et une deuxième partie de boîtier (38), **caractérisée en ce que** la première partie de boîtier (36) et la deuxième partie de boîtier (38) sont prévues sous forme de pièces de tôle façonnées et sont reliées l'une à l'autre par un assemblage en substance, que la première partie de boîtier (36) forme avec la deuxième partie de boîtier (38) la zone de raccordement en aval (28), dans lequel une première zone partielle (44) de la zone de bord de raccordement en aval (34) est prévue au niveau de la première partie de boîtier (36) et une deuxième zone partielle (46) de la zone de bord de raccordement en aval (34) est prévue au niveau de la deuxième partie de boîtier (38) et **en ce que** pour le raccordement du mélangeur (48) et de l'unité de libération du réactif (56) au boîtier de mélangeur (16), une zone de paroi de support (50) s'étendant essentiellement parallèlement au premier axe de boîtier (A₁) et une zone de paroi de transition (52) s'étendant à partir de la zone de paroi de support (50) dans la direction opposée à la zone de raccordement en aval (28) sont prévues au niveau de la deuxième partie de boîtier (38).

2. Système d'échappement selon la revendication 1, **caractérisé en ce que** la première partie de boîtier (36) présente une première zone de bord de raccordement (40), **en ce que** la deuxième partie de boîtier (38) présente une deuxième zone de bord de raccordement (42), et que l'une des deux zones de bord de raccordement (40, 42) s'étend sur l'autre zone de bord de raccordement sur le côté extérieur de la partie de boîtier (38) comprenant l'autre zone de bord de raccordement.

3. Système d'échappement selon la revendication 1 ou 2, **caractérisé en ce que** la zone de raccordement en amont (24) présente une zone de bord de raccordement en amont (32) s'étendant au-delà du premier boîtier de catalyseur (14) sur son côté extérieur.

4. Système d'échappement selon l'une des revendications 1 à 3, **caractérisé en ce que** la première zone partielle (44) et la deuxième zone partielle (46) de la zone de bord de raccordement en aval (34) s'étendent au-delà du deuxième boîtier de catalyseur (20) dans la direction circonférentielle par rapport au deuxième axe de boîtier (A₂) dans essentiellement la même mesure.

5. Système d'échappement selon l'une des revendications précédentes, **caractérisé en ce que** le deuxième axe de boîtier (A₂) est situé dans un plan de liaison (E) reliant la première partie de boîtier (36) à la deuxième partie de boîtier (38) ou s'étend parallèlement à celui-ci.

6. Système d'échappement selon l'une des revendications précédentes, **caractérisé en ce que** le premier axe de boîtier (A₁) s'étend en pente selon un angle différent de 90° par rapport à un plan de liaison (E) reliant la première partie de boîtier (36) à la deuxième partie de boîtier (38).

7. Système d'échappement selon la revendication 6, **caractérisé en ce que** le premier axe de boîtier (A₁) est incliné à l'opposé du deuxième axe (A₂) par rapport au plan de raccordement (E), selon un angle compris entre 93° et 100°.

8. Système d'échappement selon la revendication 2 ou l'une des revendications 3 à 7, si l'on se réfère à la revendication 2, **caractérisé en ce que** la zone de paroi de transition (52) s'étend à partir de la zone de paroi de support (50) essentiellement à angle droit par rapport au premier axe de boîtier (A₁) jusqu'à la deuxième zone de bord de raccordement (42).

9. Système d'échappement selon l'une des revendications précédentes, **caractérisé en ce qu'**un élément de guidage (61) guidant le flux de gaz d'échappement quittant l'extrémité en aval (26) du premier boîtier de catalyseur (14) en direction du mélangeur (48) est fixé au boîtier de mélangeur (16), de préférence au niveau de la première partie de boîtier (36).

10. Système d'échappement selon l'une des revendications précédentes, **caractérisé en ce que** le mélangeur (48) comprend un corps de mélangeur en forme de disque (62) avec une première partie de corps de mélangeur (64) essentiellement en forme de plaque et une deuxième partie de corps de mélangeur (64) essentiellement en forme de plaque, reliée à la première partie de corps de mélangeur (64), dans lequel un renflement (68, 70) est formé dans au moins l'une des parties de corps de mélangeur (64, 66) pour fournir le conduit de réception de réactif (72) s'étendant essentiellement dans une direction d'injection principale de réactif (H), et dans lequel au moins un renflement (78, 80) est formé dans au moins une des parties de corps de mélangeur (64, 66) pour fournir un conduit de libération de réactif (82, 84) s'étendant à l'écart du conduit de réception de réactif (72).

11. Système d'échappement selon la revendication 10,
**caractérisé en ce que** deux renflements (78, 80) sont formés dans au moins l'une des parties du corps de mélangeur (64, 66) pour fournir deux conduits de libération de réactif (82, 84) s'étendant à partir du conduit de réception de réactif (72) dans des directions mutuellement opposées.

12. Système d'échappement selon la revendication 10 ou 11, **caractérisé en ce que** le corps de mélangeur en forme de disque (62) est porté à la deuxième partie de boîtier (38) essentiellement à angle droit par rapport au premier axe de boîtier (A₁).
